# EUROPEAN PATENT SPECIFICATION

(11) **EP 3 587 541 B1**
(45) Date of publication and mention of the grant of the patent: **17.11.2021**
(21) Application number: 18756782.1
(22) Date of filing: 20.02.2018
(51) Int. Cl.: C10M 169/04, C10M 107/02, C10M 129/10, C10M 129/54, C10M 129/74, C10M 135/10, C10M 135/36, C10M 159/22, C10M 159/24, C10N 10/04, C10N 20/02, C10N 30/00, C10N 40/04, F16H 1/32, F16H 57/04, C10N 30/02, C10N 30/06, C10N 30/08, C10N 30/10

(54) **LUBRICANT COMPOSITION FOR A SPEED REDUCER, AND SPEED REDUCER**
SCHMIERMITTELZUSAMMENSETZUNG FÜR EINEN DREHZAHLMINDERER UND DREHZAHLMINDERER
COMPOSITION LUBRIFIANTE POUR UN RÉDUCTEUR DE VITESSE, ET RÉDUCTEUR DE VITESSE

(30) Priority: 21.02.2017 JP 2017030091
(43) Date of publication of application: 01.01.2020
(73) Proprietor: Kyodo Yushi Co., Ltd., Fujisawa-shi, Kanagawa 251-8588 (JP); Nabtesco Corporation, Tokyo 102-0093 (JP)
(72) Inventor: TANIMURA Ko, Fujisawa-shi Kanagawa 251-8588 (JP); ICHIMURA Ryosuke, Fujisawa-shi Kanagawa 251-8588 (JP); SAITO Ryosuke, Fujisawa-shi Kanagawa 251-8588 (JP); WANG Hongyou, Tsu-shi Mie 514-8553 (JP); KUMAGAI Takahide, Tsu-shi Mie 514-8553 (JP)
(74) Representative: Cabinet Beau de Loménie
(86) International application number: PCT/JP2018/005839
(87) International publication number: WO 2018/155395

(56) References cited:
- EP-A1- 1 087 008
- EP-A2- 0 719 851
- WO-A1-2013/037932
- JP-A- 2004 339 411
- JP-A- 2005 061 610
- JP-A- 2005 133 791
- JP-A- 2008 143 927
- JP-A- 2010 024 355
- JP-A- 2013 543 047
- US-A1- 2015 175 923

## Description

### Technical Field

The present invention relates to a use of a lubricant composition in an eccentric oscillating planetary gear type speed reducer, and an eccentric oscillating planetary gear type speed reducer using the lubricant composition.

### Background Art

A speed reducer is internally composed of sliding parts and rolling parts. When torque is applied to the input side, the speed reducer reduces the speed and transmits high torque to the output side. Such speed reducers are widely used in the field of transportation such as railways, airplanes, and ships as well as in the field of industry such as robots.

One of the features required of a speed reducer is that no lubricant leakage occurs. The speed reducer is provided with a seal for sealing the lubricant, and lubricant leakage is caused because lubricant-insoluble matter (sludge) produced by the deterioration of the lubricant is accumulated in the vicinity of the seal. Therefore, it is required that the amount of sludge produced from the lubricant be small.

Another required feature of the speed reducer is a high efficiency. To date, lubricating oils or greases blended with a calcium salt in a molybdenum dithiocarbamate have been proposed (for example, Patent Literature 1).

Still another required feature of the speed reducer is that the speed reducer can be used in cold regions and the like with the expansion of its use environment. There is a problem in cold regions and the like that the input side torque (starting torque) increases at low temperature as in the winter season. Thus, there is a demand for reduction of input torque at low temperature.

### Citation List

### Patent Literatures

Patent Literature 1: Japanese Patent Application Publication No. 2004-339411
EP 0 719 851 A, WO 2013/037932 A, US 2015/175923 A, and EP 1 087 008 A show a lubricant composition as used according to claim 1.

### Summary of Invention

### Problems to be solved by the invention

Therefore, an object of the present invention is to use a lubricant composition for an eccentric oscillating planetary gear type speed reducer which produces the same or smaller amount of sludge, which requires a lower input torque at low temperature, and which has the same or higher starting efficiency than a conventional lubricant for an eccentric oscillating planetary gear type speed reducer.

Another object of the present invention is to provide an eccentric oscillating planetary gear type speed reducer having a high starting efficiency, in which lubricant leakage is unlikely to occur and the input torque at low temperature is low.

### Means for solution of the problems

The present invention provides a use of a lubricant composition and speed reducer sealing the used composition therein, and is defined in the claims.

### Advantageous Effects

The lubricant composition for a speed reducer used in the invention can reduce the amount of produced sludge to an amount equal to or smaller than that of a conventional lubricant composition for a speed reducer. The lubricant composition used in the invention can also reduce the amount of produced sludge accumulated (accumulated particularly near the seal) to an equal or smaller amount. Therefore, the speed reducer of the invention sealing the composition therein is unlikely to cause lubricant leakage. In addition, the lubricant composition for a speed reducer used in the invention can suppress the increase in input torque at low temperature. Therefore, the speed reducer of the invention sealing the composition therein can preferably be used also in cold regions and the like. Moreover, the lubricant composition for a speed reducer used in the invention can improve the starting efficiency of the speed reducer to a degree equal to or greater than that of a conventional lubricant composition for a speed reducer.

### Description of Compositions

### <(a) Base Oil>

The (a) base oil used in the invention contains a synthetic oil as an essential component, and may further contain a different base oil such as a mineral oil. As the synthetic oil, it is possible to use any synthetic oil usually used in a lubricant composition, such as a synthetic hydrocarbon oil, an ester oil, a phenyl ether, or a polyglycol. The synthetic oil may be used singly or in combination of two or more kinds.

Specifically, the synthetic hydrocarbon oil includes one obtained by mixing and polymerizing one or two or more kinds of α-olefins. The α-olefin includes an α-olefin produced by using ethylene, propylene, butene, or a derivative thereof as a raw material, and is preferably an α-olefin having 6 to 18 carbon atoms (for example, 1-desen, 1-dodesen, or the like). The most preferable synthetic hydrocarbon oil is a poly-α-olefin (PAO) which is an oligomer of 1-desen or 1-dodesen.

The ester oil includes a monoester, a diester, a polyol ester, a complex ester, or the like.

The phenyl ether includes an alkyl diphenyl ether or the like.

The polyglycol includes a polyalkylene glycol or the like.

The base oil is preferably a base oil containing a synthetic hydrocarbon oil (for example, PAO) and is more preferably the combination of a synthetic hydrocarbon oil (for example, PAO) and a mineral oil.

The percentage of the synthetic oil in the base oil (for example, a synthetic hydrocarbon oil such as PAO) is preferably 10 to 100% by mass, more preferably 10 to 50% by mass, and more preferably 10 to 30% by mass. The percentage of the synthetic oil in the base oil is preferably 10% by mass or more because it is possible to suppress the increase in input torque even at low temperature.

The percentage of the base oil in the lubricant composition is preferably 80 to 99.5% by mass and more preferably 90 to 99% by mass. The percentage of the base oil in the lubricant composition is preferably in such a range because it is possible to obtain a sufficient lubricating effect without loss of fluidity.

The kinematic viscosity at 40°C of the base oil used in the invention is, for example, 20 to 300 mm²/s, preferably 30 to 220 mm²/s, more preferably 50 to 200 mm²/s, further preferably 100 to 200 mm²/s, and particularly preferably 135 to 200 mm²/s. It is possible to achieve a satisfactory speed reducer lifetime even at high temperature if the kinematic viscosity is 20 mm²/s or more, while it is possible to prevent a failure from occurring in the speed reducer on activation at low temperature if the kinematic viscosity is 300 mm²/s or less. Note that the kinematic viscosity at 40°C is measured by a method in accordance with JIS K 2283.

### <(b) Calcium Salt>

The (b) calcium salt used in the invention is at least one selected from the group consisting of calcium salts of petroleum sulfonic acids, calcium salts of alkyl aromatic sulfonic acids, calcium salts of salicylates (calcium salts of alkyl salicylic acids), calcium salts of phenates (calcium salts of alkyl phenols and calcium salts of sulfurized alkyl phenols), calcium salts of oxidized waxes, overbased calcium salts of petroleum sulfonic acids, overbased calcium salts of alkyl aromatic sulfonic acids, overbased calcium salts of salicylates, overbased calcium salts of phenates, and overbased calcium salts of oxidized waxes. The calcium salt may be used singly or in combination of two or more kinds. These calcium salts can act as a detergent-dispersant, solubilize the sludge to reduce the amount of sludge produced, and moreover improve the efficiency of the speed reducer.

Note that, in the present specification, an "overbased calcium salt of X" means a calcium salt of X whose base number measured in accordance with JIS K 2501 is 200 mg KOH/g or more. A "calcium salt of X" means a calcium salt other than an overbased calcium salt (neutral or basic calcium salt), that is, a calcium salt of X whose base number measured in accordance with JIS K 2501 is less than 200 mg KOH/g. When simply described as "calcium salt," it may be neutral, basic, or overbased.

The (b) calcium salt is preferably at least one selected from the group consisting of calcium salts of alkyl aromatic sulfonic acids and overbased calcium salts of salicylates, and more preferably the combination of a calcium salt of an alkyl aromatic sulfonic acid and an overbased calcium salt of a salicylate. The combination of a calcium salt of an alkyl aromatic sulfonic acid having a base number of 0.1 to 100 mg KOH/g and an overbased calcium salt of a salicylate having a base number of 200 to 500 mg KOH/g is particularly preferable.

The amount of the (b) calcium salt in the lubricant composition is preferably 0.05 to 5% by mass and more preferably 0.1 to 3% by mass. If the amount is 0.05% by mass or more, it is possible to sufficiently suppress the accumulation of the produced sludge. Meanwhile, even if the amount exceeds 5% by mass, it is unlikely that the effect is further improved.

### <(c) Antioxidant>

The lubricant composition contains an antioxidant and thus can suppress the production of sludge generated due to the deterioration of the base oil and the additives. The (c) antioxidant usable in the invention can include, but is not particularly limited to, phenol antioxidants [for example, benzenepropanoic acid 3,5-bis(1,1-dimethyl-ethyl)-4-hydroxy-,C7-C9 side chain alkyl ester, 2,4-dimethyl-6-tertiary-butylphenol, 2,6-di-tertiary butyl-phenol, octadecyl 3-(3,5-di-tert-butyl-4-hydroxyphenyl)propionate, tertiary butyl hydroxyanisole, 2,6-di-tert-butyl-4-methylphenol, thiodiethylene bis[3-(3,5-di-tert-butyl-4-hydroxyphenyl)propionate], hindered phenol compounds such as 2,6-di-t-butyl-p-cresol and pentaerythritol-tetrakis [3-(3,5-di-t-butyl-4-hydroxyphenyl)propionate]], amine antioxidants [for example, aromatic amine compounds such as diphenylamine, phenyl-α-naphthylamine, phenothiazine, and alkylated products thereof], and the like. Phenol antioxidants are preferable and hindered phenols are more preferable. The hindered phenols have a melting point of preferably 100°C or less and more preferably 50°C or less from the viewpoint of solubility to the base oil. Specifically, preferable examples include benzenepropanoic acid 3,5-bis(1,1-dimethyl-ethyl)-4-hydroxy-,C7-C9 side chain alkyl ester (liquid at 25°C), 2,4-dimethyl-6-tertiary-butylphenol (liquid at 25°C), 2,6-di-tertiary butyl-phenol (35 to 37°C), octadecyl 3-(3,5-di-tert-butyl-4-hydroxyphenyl)propionate (49 to 54°C), tertiary butyl hydroxyanisole (59 to 65°C), 2,6-di-tert-butyl-4-methylphenol (70°C), and thiodiethylene bis[3-(3,5-di-tert-butyl-4-hydroxyphenyl)propionate] (70°C) (melting point in the parentheses). Note that the melting point of the phenol antioxidant is measured by a method in accordance with JIS K 0064. The antioxidant may be used singly or in combination of two or more kinds.

The amount of the (C) antioxidant in the lubricant composition is preferably 0.05 to 5% by mass and more preferably 0.1 to 3% by mass. If the amount is 0.05% by mass or more, it is possible to effectively suppress the production of sludge. Meanwhile, even if the amount exceeds 5% by mass, it is unlikely that the effect is further improved.

### <(d) Glycerin Fatty Acid Ester>

The lubricant composition contains a glycerin fatty acid ester, and thus forms an adsorption film on the metal surface to reduce friction, making it possible to improve the efficiency of the speed reducer to a degree equal to or greater than that of the conventional technique. The (d) glycerin fatty acid ester usable in the invention is not limited, but has a melting point of preferably 100°C or less and more preferably 50°C or less from the viewpoint of solubility to the base oil. Note that the melting point of the glycerin fatty acid ester is measured by a method in accordance with JIS K 0064.

The ester may be a complete ester or a partial ester, but is preferably a partial ester and more preferably a monoester. The fatty acid constituting the ester is preferably a linear or branched saturated or unsaturated fatty acid having 6 to 22 carbon atoms and more preferably a linear saturated fatty acid having 6 to 18 carbon atoms. Specifically, preferable examples of the glycerin fatty acid ester include glycerin monocaprylate (31°C), glycerin monocaprate (46°C), glycerin monolaurate (57°C), glycerin monostearate (63 to 70°C), glycerin monobehenate (75 to 85°C), glycerin mono 12 hydroxystearate (70 to 78°C), and glycerin monooleate (37°C) (melting point in the parentheses). Among these, glycerin monocaprylate (31°C) is preferable. The glycerin fatty acid ester may be used singly or in combination of two or more kinds.

The amount of the (d) glycerin fatty acid ester in the lubricant composition is preferably 0.05 to 5% by mass and more preferably 0.1 to 3% by mass. If the amount is 0.05% by mass or more, it is possible to exhibit a sufficient friction reducing effect. Meanwhile, even if the amount exceeds 5% by mass, it is unlikely that the effect is further improved.

### <Thickener>

The lubricant composition may contain a thickener. The thickener includes all thickeners. Examples thereof include soap thickeners such as lithium soaps and complex lithium soaps, urea thickeners such as diurea, inorganic thickeners such as organic clay and silica, organic thickeners such as PTFE, and the like. Preferable ones are lithium soap thickeners and urea thickeners, and more preferable ones are lithium soap thickeners.

The percentage of the thickener in the lubricant composition is preferably 0 to 20% by mass (for example, 1 to 15% by mass) and further preferably 0.5 to 10% by mass (for example, 0.5 to 3% by mass). If the percentage is 0.5% by mass or more, the thickening effect is exhibited. If the percentage is 20% by mass or less, it is possible to obtain a sufficient lubricating effect because the thickener becomes a grease of moderate consistency which allows the lubricant to spread throughout the lubrication sites.

If the lubricant composition contains a thickener, the cone penetration of the lubricant composition is preferably 300 to 450 (for example, 350 to 410) and more preferably 395 to 425. Note that, as defined in JIS K 2220, the cone penetration is a value measured immediately after the sample is worked for 60 strokes with a specified working machine.

### <Additive>

The lubricant composition can be added with various types of additives as needed. Such additives include metal salt rust inhibitors other than the component (b), metal salt detergent-dispersants other than the component (b), antioxidants other than the component (c), oiliness agents, metal corrosion inhibitors, antiwear agents, extreme pressure agents ("EP agent"), and solid lubricants other than the component (d), and the like. Among these, extreme pressure agents are preferable.

The extreme pressure agent which may be used in the invention is not particularly limited, and preferably contains at least one selected from, for example, molybdenum dithiocarbamates, trioctyl phosphates, and ashless dithiocarbamates. It is further preferable to use (e) a thiadiazole compound in combination. A preferable example of the molybdenum dithiocarbamate is one represented by the following formula:

(R¹R²N-CS-S)₂-Mo₂OₘSₙ

wherein R¹ and R² each independently represent an alkyl group having 5 to 24 carbon atoms, m is 0 to 3, n is 4 to 1, and m + n = 4.

The thiadiazole compound includes a 1,2,4-thiadiazole derivative, a 1,3,4-thiadiazole derivative, a 1,2,5-thiadiazole derivative, or a 1,4,5-thiadiazole derivative, and is preferably a 1,3,4-thiadiazole derivative. A preferable example of the 1,3,4-thiadiazole derivative is one represented by the following formula 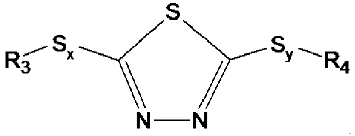 wherein R₃ and R₄ each independently represent a hydrogen atom or a linear or branched alkyl group or alkenyl group having 1 to 20 carbon atoms, and x and y are each 0 to 2.

If an extreme pressure agent is contained, a reaction film is formed on the metal surface to reduce friction and wear, making it possible to improve the efficiency of the speed reducer and the speed reducer lifetime at high temperature. If the lubricant composition contains an extreme pressure agent, the amount of the extreme pressure agent in the lubricant composition is preferably 5% by mass or less, more preferably 3% by mass or less, and further preferably 0.1 to 3% by mass. The extreme pressure agent in an amount of 5% by mass or less makes it possible to improve the lubricating lifetime at high temperature and the efficiency of the speed reducer while suppressing the production of sludge derived from the additives. In particular, the amount of the molybdenum dithiocarbamate is preferably 0.1 to 2% by mass and further preferably 0.1 to 1.5% by mass.

Compositions for the invention will be more specifically described with reference to Examples below.

### [Examples]

The components presented in Table 1 and Table 2 were mixed at the percentages presented in Table 1 and Table 2 to prepare lubricant compositions of Examples and Comparative Examples. These lubricant compositions were tested under the following conditions. Table 1 and Table 2 present the results.

### Evaluation of Low Temperature Torque of Speed Reducer (Low Temperature Property)

A speed reducer was used to carry out a test under the following conditions, in which the torque of the input shaft required to rotate the speed reducer without load was read to measure the input torque at low temperature.

### <Test Conditions>

model number of the speed reducer: RV-42N3-127.15
test temperature: -10°C
load torque [load in the radial direction (direction perpendicular to the shaft direction)): no load
output rotational speed: 15.7 rpm

### <Acceptableness Determination>

Determination was made using the relative torque ratio with the torque of

### Comparative Example 1 set to 1.

| | |
|---|---|
| The relative torque ratio is 0.5 (-10°C) or less | ○ (acceptable) |
| The relative torque ratio exceeds 0.5 (-10°C) | × (unacceptable) |

### Sludge Resistance (RBOT Test)

An RBOT test machine in accordance with JIS K 2514 3. was used to carry out a test under the following conditions. The insoluble matter produced after the test was filtered while being washed with hexane and quantified as sludge.

### <Test Conditions>

test temperature: 150°C
test time: 24 h

### <Acceptableness Determination>

Evaluation was conducted using the relative ratio with the amount of sludge of Comparative Example 1 set to 1.0.

| | |
|---|---|
| The sludge amount ratio is 1.2 or less | ○ (acceptable) |
| The sludge amount ratio exceeds 1.2 | × (unacceptable) |

### Evaluation of Starting Efficiency of Speed Reducer

A speed reducer was used to carry out a test under the following conditions, in which the starting efficiency (actual output torque with the output torque outputted 100% with respect to the torque of the input shaft (theoretical value) set to 100) was measured.

### <Test Conditions>

model number of the speed reducer: RV-42N3-127.15
test temperature: 25°C
load torque [load in the radial direction (direction perpendicular to the shaft direction)): 42 kgf-m

<Acceptableness Determination>

Evaluation was conducted using the relative efficiency ratio with the efficiency of Comparative Example 1 set to 1.0.

| | |
|---|---|
| The relative efficiency is 1.0 or more | ○ (acceptable) |
| The relative efficiency is less than 1.0 | × (unacceptable) |

### <Comprehensive Determination>

| | |
|---|---|
| All of the low temperature property, sludge resistance, and starting efficiency are acceptable | ○ (acceptable) |
| One or more of them are unacceptable | × (unacceptable) |

Details of the (b) calcium salt, the (c) antioxidant, the (d) glycerin fatty acid ester, the (e) thiadiazole compound, and the extreme pressure agent in Table 1 and Table 2 are as follows.

### (b) Calcium Salt

- Ca sulfonate: calcium salt of an alkyl aromatic sulfonic acid (manufactured by KING INDUSTRIES, Inc., trade name: NA-SUL729, base number of 1 mg KOH/g)
- Ca salicylate: overbased calcium salt of a salicylate (manufactured by Osuka Kagaku, trade name: OSCA 438B, base number of 320 mg KOH/g)

### (c) Antioxidant

- hindered phenol (manufactured by BASF Japan, trade name: IRGANOX L135, liquid at 25°C)

### (d) Glycerin Fatty Acid Ester

- glycerin monocaprylate (Riken Vitamin Co., Ltd., trade name: POEM M-100, melting point of 31°C)

### (e) Extreme Pressure Agent

- thiadiazole compound A (manufactured by DIC Corporation, trade name: DAILUBE R-300)
- thiadiazole compound B (manufactured by Afton Chemical Corporation, trade name: HITEC 4313)
- thiadiazole compound C (manufactured by R. T. VANDERBILT, trade name: CUVAN 826)
- MoDTC: molybdenum dialkyl dithiocarbamate (manufactured by ADEKA Corporation, trade name ADEKA SAKURA-LUBE 525)
- TOP: trioctyl phosphate (manufactured by Daihachi Chemical Industry Co., Ltd., trade name: TOP)
- ashless DTC: ashless dithiocarbamate (manufactured by R. T. VANDERBILT, trade name: Vanlube 7723)

As presented in Table 1 and Table 2, the lubricant compositions of Examples 1 to 25 have a better low temperature property than Comparative Example 1 not containing a synthetic hydrocarbon oil in the base oil, and have a better sludge resistance than Comparative Example 2 not containing a calcium salt in the additives and Comparative Example 3 not containing an antioxidant. In addition, the lubricant compositions of Examples 1 to 11 have a better starting efficiency than Comparative Example 4 not containing a glycerin fatty acid ester.

It is understood that Example 7 using Ca sulfonate and Ca salicylate in combination and Examples 8 to 25 further containing a thiadiazole compound have a further better starting efficiency than Examples 1 to 6.

**[Table 1]**

| | | | | | Example | | | | | | | | | | | | |
|---|---|---|---|---|---|---|---|---|---|---|---|---|---|---|---|---|---|
| | | | | | 1 | 2 | 3 | 4 | 5 | 6 | 7 | 8 | 9 | 10 | 11 | 12 | 13 |
| (a) Base Oil (Mass Ratio in Base Oil) | Mineral Oil | | | | 70 | 70 | 70 | 70 | 70 | 70 | 70 | 70 | 70 | 70 | 70 | 70 | 70 |
| | Synthetic Hydrocarbon Oil (PAO) | | | | 30 | 30 | 30 | 30 | 30 | 30 | 30 | 30 | 30 | 30 | 30 | 30 | 30 |
| | Kinematic Viscosity @40°C, mm²/s | | | | 150 | 150 | 150 | 150 | 150 | 150 | 150 | 150 | 150 | 150 | 150 | 150 | 150 |
| Additive (Mass% Based on Total Mass of Composition) | (b) Ca | Salt | Ca Sulfonate | | - | - | - | - | - | - | 0.2 | 0.2 | 0.2 | 0.2 | 0.2 | 0.2 | 0.2 |
| | | | Ca Salicylate | | 0.2 | 0.2 | 0.05 | 5 | 0.2 | 0.2 | 0.2 | 0.2 | 0.2 | 0.2 | 0.2 | 0.2 | 0.2 |
| | (c) Antioxidant | | | | 0.2 | 0.2 | 0.2 | 0.2 | 0.05 | 5 | 0.2 | 0.2 | 0.2 | 0.2 | 0.2 | 0.2 | 0.2 |
| | (d) Glycerin Fatty Acid Ester | | | | 0.2 | 0.2 | 0.2 | 0.2 | 0.2 | 0.2 | 0.2 | 0.2 | 0.2 | 0.2 | 0.2 | 0.2 | 0.2 |
| | EP Agent | (e) Thiadiazole Compound | | A | - | - | - | - | - | - | - | 0.07 | 0.13 | 0.25 | 0.5 | 1.0 | 1.5 |
| | | | | B | - | - | - | | - | - | - | - | - | - | - | - | |
| | | | | C | - | - | - | - | - | - | - | - | - | - | - | - | - |
| | | MoDTC | | | 0.5 | 0.5 | 0.5 | 0.5 | 0.5 | 0.5 | 0.5 | 0.5 | 0.5 | 0.5 | 0.5 | 0.5 | 0.5 |
| | | TOP | | | - | 0.5 | 0.5 | 0.5 | 0.5 | 0.5 | 0.5 | 0.5 | 0.5 | 0.5 | 0.5 | 0.5 | 0.5 |
| | | Ashless DTC | | | - | 0.2 | 0.2 | 0.2 | 0.2 | 0.2 | 0.2 | 0.2 | 0.2 | 0.2 | 0.2 | 0.2 | 0.2 |
| Low Temperature Property | | Result | | | 0.5 | 0.5 | 0.5 | 0.5 | 0.5 | 0.5 | 0.5 | 0.5 | 0.5 | 0.5 | 0.5 | 0.5 | 0.5 |
| | | Determination | | | ○ | ○ | ○ | ○ | | ○ | ○ | ○ | ○ | ○ | ○ | ○ | ○ |
| Sludge Resistance | | Result | | | 1.0 | 1.1 | 1.2 | 1.1 | 1.2 | 1.1 | 1.1 | 1.1 | 1.1 | 1.1 | 1.1 | 1.2 | 1.2 |
| | | Determination | | | ○ | ○ | ○ | ○ | ○ | ○ | ○ | ○ | ○ | ○ | ○ | ○ | ○ |
| Starting Efficiency | | Result | | | 1.0 | 1.0 | 1.0 | 1.0 | 1.0 | 1.0 | 1.1 | 1.2 | 1.2 | 1.2 | 1.3 | 1.3 | 1.3 |
| | | Determination | | | ○ | ○ | ○ | ○ | ○ | ○ | ○ | ○ | ○ | ○ | ○ | ○ | ○ |
| Comprehensive Determination | | | | | ○ | ○ | ○ | ○ | ○ | ○ | ○ | ○ | ○ | ○ | ○ | ○ | ○ |

**[Table 2]**

| | | | | | | | Example | | | | | | | | | | | | Comparative Example | | | |
|---|---|---|---|---|---|---|---|---|---|---|---|---|---|---|---|---|---|---|---|---|---|---|
| | | | | | | | 14 | 15 | 16 | 17 | 18 | 19 | 20 | 21 | 22 | 23 | 24 | 25 | 1 | 2 | 3 | 4 |
| (a) Base Oil (Mass Ratio in Base Oil) | Mineral Oil | | | | | | 70 | 70 | 70 | 70 | 70 | 70 | 70 | 70 | 70 | 70 | 70 | 70 | 100 | 70 | 70 | 70 |
| | Synthetic Hydrocarbon Oil (PAO) | | | | | | 30 | 30 | 30 | 30 | 30 | 30 | 30 | 30 | 30 | 30 | 30 | 30 | - | 30 | 30 | 30 |
| | Kinematic Viscosity @40°C, mm²/s | | | | | | 150 | 150 | 150 | 15 0 | 150 | 150 | 150 | 150 | 150 | 150 | 150 | 150 | 150 | 150 | 150 | 150 |
| Additive (Mass% Based on Total Mass of Composition) | (b) Ca | Salt | | Ca Sulfonate | | | 0.2 | 0.2 | 0.2 | 0.2 | 0.2 | 0.2 | 0.2 | 0.2 | 0.2 | 0.2 | 0.2 | 0.2 | - | - | - | - |
| | | | | Ca Salicylate | | | 0.2 | 0.2 | 0.2 | 0.2 | 0.2 | 0.2 | 0.2 | 0.2 | 0.2 | 0.2 | 0.2 | 0.2 | 0.2 | - | 0.2 | 0.2 |
| | (c) Antioxidant | | | | | | 0.2 | 0.2 | 0.2 | 0.2 | 0.2 | 0.2 | 0.2 | 0.2 | 0.2 | 0.2 | 0.2 | 0.2 | 0.2 | 0.2 | - | 0.2 |
| | (d) Glycerin Fatty Acid Ester | | | | | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | - |
| | EP Agent | | (e) Thiadiazole Compound | | | A | - | - | - | - | - | - | - | - | - | - | - | - | - | - | - | - |
| | | | | | | B | 0.07 | 0.13 | 0.25 | 0.5 | 1.0 | 1.5 | - | - | - | - | - | - | - | - | - | - |
| | | | | | | C | - | - | - | - | - | - | 0.07 | 0.13 | 0.25 | 0.5 | 1.0 | 1.5 | - | - | - | - |
| | | | MoDTC | | | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | TOP | | | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | Ashless | | DTC | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Low Temperature Property | | | Result | | | | 0.5 | 0.5 | 0.5 | 0.5 | 0.5 | 0.5 | 0.5 | 0.5 | 0.5 | 0.5 | 0.5 | 0.5 | 1.0 | 0.5 | 0.5 | 0.5 |
| | | | Determination | | | | ○ | ○ | ○ | ○ | ○ | ○ | ○ | ○ | ○ | ○ | ○ | ○ | - | ○ | ○ | ○ |
| Sludge Resistance | | | Result | | | | 1.1 | 1.1 | 1.1 | 1.1 | 1.2 | 1.2 | 1.1 | 1.1 | 1.1 | 1.1 | 1.2 | 1.2 | 1.0 | 1.4 | 1.4 | 1.1 |
| | | | Determination | | | | ○ | ○ | ○ | ○ | ○ | ○ | ○ | ○ | ○ | ○ | ○ | ○ | - | × | × | ○ |
| Starting Efficiency | | | Result | | | | 1.2 | 1.2 | 1.2 | 1.3 | 1.3 | 1.3 | 1.2 | 1.2 | 1.2 | 1.3 | 1.3 | 1.3 | 1.0 | 1.0 | 1.0 | 0.9 |
| | | | Determination | | | | ○ | ○ | ○ | ○ | ○ | ○ | ○ | ○ | ○ | ○ | ○ | ○ | - | ○ | ○ | × |
| Comprehensive Determination | | | | | | | ○ | ○ | ○ | ○ | ○ | ○ | ○ | ○ | ○ | ○ | ○ | ○ | - | × | × | × |

## Claims

1. A use of a lubricant composition as a lubricant composition for an eccentric oscillating planetary gear type speed reducer, comprising the following components (a) to (d):
(a) a base oil containing a synthetic oil;
(b) at least one calcium salt whose base number measured in accordance with JIS K 2501 is at least 200 mg KOH/g or is less than 200 mg KOH/g, and which is selected from the group consisting of calcium salts of petroleum sulfonic acids, calcium salts of alkyl aromatic sulfonic acids, calcium salts of salicylates, calcium salts of phenates, calcium salts of oxidized waxes;
(c) an antioxidant; and
(d) a glycerin fatty acid ester.

2. The use according to claim 1, wherein in the lubricant composition a content of the (b) calcium salt is 0.05 to 5% by mass, a content of the (c) antioxidant is 0.05 to 5% by mass, and a content of the (d) glycerin fatty acid ester is 0.05 to 5% by mass based on a total mass of the lubricant composition.

3. The use according to claim 1 or 2, wherein the (b) calcium salt is selected from the group consisting of calcium salts of alkyl aromatic sulfonic acids whose base number measured in accordance with JIS K 2501 is less than 200 mg KOH/g, and calcium salts of salicylates whose base number measured in accordance with JIS K 2501 is at least 200 mg KOH/g.

4. The use according to any one of claims 1 to 3, wherein the (c) antioxidant is a hindered phenol.

5. The use according to any one of claims 1 to 4, wherein the synthetic oil in the (a) base oil is a synthetic hydrocarbon oil, and a kinematic viscosity at 40°C of the base oil is 20 to 300 mm²/s.

6. The use according to any one of claims 1 to 5, wherein the lubricant composition further comprises (e) a thiadiazole compound, wherein a content of the thiadiazole compound is 5% by mass or less based on a total mass of the lubricant composition.

7. An eccentric oscillating planetary gear type speed reducer, in which a lubricant composition for a speed reducer is sealed, comprising the following components (a) to (d):
(a) a base oil containing a synthetic oil;
(b) at least one calcium salt whose base number measured in accordance with JIS K 2501 is at least 200 mg KOH/g or is less than 200 mg KOH/g, and which is selected from the group consisting of calcium salts of petroleum sulfonic acids, calcium salts of alkyl aromatic sulfonic acids, calcium salts of salicylates, calcium salts of phenates, calcium salts of oxidized waxes;
(c) an antioxidant; and
(d) a glycerin fatty acid ester.

8. The eccentric oscillating planetary gear type speed reducer according to claim 7, wherein a content of the (b) calcium salt is 0.05 to 5% by mass, a content of the (c) antioxidant is 0.05 to 5% by mass, and a content of the (d) glycerin fatty acid ester is 0.05 to 5% by mass based on a total mass of the lubricant composition.

9. The eccentric oscillating planetary gear type speed reducer according to claim 7 or 8, wherein the (b) calcium salt is selected from the group consisting of calcium salts of alkyl aromatic sulfonic acids whose base number measured in accordance with JIS K 2501 is less than 200 mg KOH/g, and calcium salts of salicylates whose base number measured in accordance with JIS K 2501 is at least 200 mg KOH/g.

10. The eccentric oscillating planetary gear type speed reducer according to any one of claims 7 to 9, wherein the (c) antioxidant is a hindered phenol.

11. The eccentric oscillating planetary gear type speed reducer according to any one of claims 7 to 10, wherein the synthetic oil in the (a) base oil is a synthetic hydrocarbon oil, and a kinematic viscosity at 40°C of the base oil is 20 to 300 mm²/s.

12. The eccentric oscillating planetary gear type speed reducer according to any one of claims 7 to 11, wherein the lubricant composition further comprises (e) a thiadiazole compound, wherein a content of the thiadiazole compound is 5% by mass or less based on a total mass of the lubricant composition.

## Patentansprüche

1. Verwendung einer Schmiermittelzusammensetzung als eine Schmiermittelzusammensetzung für einen Drehzahlminderer vom Typ eines exzentrischen oszillierenden Planetengetriebes, umfassend die folgenden Komponenten (a) bis (d):
(a) ein Basisöl, das ein synthetisches Öl enthält,
(b) mindestens ein Kalziumsalz, dessen gemäß JIS K 2501 gemessene Basenzahl mindestens 200 mg KOH/g ist oder niedriger als 200 mg KOH/g ist und das ausgewählt ist aus der Gruppe bestehend aus Kalziumsalzen von Erdölsulfonsäuren, Kalziumsalzen von aromatischen Alkylsulfonsäuren, Kalziumsalzen von Salicylaten, Kalziumsalzen von Phenaten, Kalziumsalzen von oxidierten Wachsen,
(c) ein Antioxidationsmittel und
(d) einen Glycerinfettsäureester.

2. Verwendung nach Anspruch 1, wobei in der Schmiermittelzusammensetzung bezogen auf eine Gesamtmasse der Schmiermittelzusammensetzung ein Gehalt an dem (b) Kalziumsalz 0,05 bis 5 Masse-% beträgt, ein Gehalt an dem (c) Antioxidationsmittel 0,05 bis 5 Masse-% beträgt und ein Gehalt an dem (d) Glycerinfettsäureester 0,05 bis 5 Masse-% beträgt.

3. Verwendung nach Anspruch 1 oder 2, wobei das (b) Kalziumsalz ausgewählt ist aus der Gruppe bestehend aus Kalziumsalzen von aromatischen Alkylsulfonsäuren, deren gemäß JIS K 2501 gemessene Basenzahl niedriger als 200 mg KOH/g ist, und Kalziumsalzen von Salicylaten, deren gemäß JIS K 2501 gemessene Basenzahl mindestens 200 mg KOH/g ist.

4. Verwendung nach einem der Ansprüche 1 bis 3, wobei das (c) Antioxidationsmittel ein gehindertes Phenol ist.

5. Verwendung nach einem der Ansprüche 1 bis 4, wobei das synthetische Öl in dem (a) Basisöl ein synthetisches Kohlenwasserstofföl ist und eine kinematische Viskosität des Basisöls bei 40 °C 20 bis 300 mm²/s beträgt.

6. Verwendung nach einem der Ansprüche 1 bis 5, wobei bezogen auf eine Gesamtmasse der Schmiermittelzusammensetzung die Schmiermittelzusammensetzung ferner (e) eine Thiadiazolverbindung umfasst, wobei ein Gehalt der Thiadiazolverbindung 5 Masse-% oder weniger beträgt.

7. Drehzahlminderer vom Typ eines exzentrischen oszillierenden Planetengetriebes, in dem eine Schmiermittelzusammensetzung für einen Drehzahlminderer eingeschlossen ist, welche die folgenden Komponenten (a) bis (d) umfasst:
(a) ein Basisöl, das ein synthetisches Öl enthält,
(b) mindestens ein Kalziumsalz, dessen gemäß JIS K 2501 gemessene Basenzahl mindestens 200 mg KOH/g ist oder niedriger als 200 mg KOH/g ist und das ausgewählt ist aus der Gruppe bestehend aus Kalziumsalzen von Erdölsulfonsäuren, Kalziumsalzen von aromatischen Alkylsulfonsäuren, Kalziumsalzen von Salicylaten, Kalziumsalzen von Phenaten, Kalziumsalzen von oxidierten Wachsen,
(c) ein Antioxidationsmittel und
(d) einen Glycerinfettsäureester.

8. Drehzahlminderer vom Typ eines exzentrischen oszillierenden Planetengetriebes nach Anspruch 7, wobei bezogen auf eine Gesamtmasse der Schmiermittelzusammensetzung ein Gehalt an dem (b) Kalziumsalz 0,05 bis 5 Masse-% beträgt, ein Gehalt an dem (c) Antioxidationsmittel 0,05 bis 5 Masse-% beträgt und ein Gehalt an dem (d) Glycerinfettsäureester 0,05 bis 5 Masse-% beträgt.

9. Drehzahlminderer vom Typ eines exzentrischen oszillierenden Planetengetriebes nach Anspruch 7 oder 8, wobei das (b) Kalziumsalz ausgewählt ist aus der Gruppe bestehend aus Kalziumsalzen von aromatischen Alkylsulfonsäuren, deren gemäß JIS K 2501 gemessene Basenzahl niedriger als 200 mg KOH/g ist, und Kalziumsalzen von Salicylaten, deren gemäß JIS K 2501 gemessene Basenzahl mindestens 200 mg KOH/g ist.

10. Drehzahlminderer vom Typ eines exzentrischen oszillierenden Planetengetriebes nach einem der Ansprüche 7 bis 9, wobei das (c) Antioxidationsmittel ein gehindertes Phenol ist.

11. Drehzahlminderer vom Typ eines exzentrischen oszillierenden Planetengetriebes nach einem der Ansprüche 7 bis 10, wobei das synthetische Öl in dem (a) Basisöl ein synthetisches Kohlenwasserstofföl ist und eine kinematische Viskosität des Basisöls bei 40 °C 20 bis 300 mm²/s beträgt.

12. Drehzahlminderer vom Typ eines exzentrischen oszillierenden Planetengetriebes nach einem der Ansprüche 7 bis 11, wobei die Schmiermittelzusammensetzung ferner (e) eine Thiadiazolverbindung umfasst, wobei bezogen auf eine Gesamtmasse der Schmiermittelzusammensetzung ein Gehalt der Thiadiazolverbindung 5 Masse-% oder weniger beträgt.

## Revendications

1. Utilisation d'une composition de lubrifiant comme une composition de lubrifiant pour un réducteur de vitesse de type engrenage planétaire oscillant excentrique, comprenant les constituants (a) à (d) suivants :
(a) une huile de base contenant une huile synthétique ;
(b) au moins un sel de calcium dont le nombre de base mesuré selon JIS K 2501 est d'au moins 200 mg de KOH/g ou est inférieur à 200 mg de KOH/g, et qui est choisi dans le groupe consistant en sels de calcium d'acides sulfoniques de pétrole, sels de calcium d'acides alkylsulfoniques aromatiques, sels de calcium de salicylates, sels de calcium de phénates, sels de calcium de cires oxydées ;
(c) un antioxydant ; et
(d) un ester d'acide gras de glycérine.

2. Utilisation selon la revendication 1, dans laquelle dans la composition de lubrifiant une teneur du (b) sel de calcium est de 0,05 à 5 % en masse, une teneur du (c) oxydant est de 0,05 à 5 % en masse, et une teneur du (d) ester d'acide gras de glycérine est de 0,05 à 5 % en masse sur la base d'une masse totale de la composition de lubrifiant.

3. Utilisation selon la revendication 1 ou 2, dans laquelle le (b) sel de calcium est choisi dans le groupe consistant en sels de calcium d'acides alkylsulfoniques aromatiques dont le nombre de base mesuré selon JIS K 2501 est inférieur à 200 mg de KOH/g, et sels de calcium de salicylates dont le nombre de base mesuré selon JIS K 2501 est d'au moins 200 mg de KOH/g.

4. Utilisation selon l'une quelconque des revendications 1 à 3, dans laquelle le (c) antioxydant est un phénol encombré.

5. Utilisation selon l'une quelconque des revendications 1 à 4, dans laquelle l'huile synthétique dans la (a) huile de base est une huile hydrocarbonée synthétique, et une viscosité cinématique à 40°C de l'huile de base est de 20 à 300 mm²/s.

6. Utilisation selon l'une quelconque des revendications 1 à 5, dans laquelle la composition de lubrifiant comprend de plus (e) un composé de thiadiazole, dans laquelle une teneur du composé de thiadiazole est de 5 % en masse ou inférieure sur la base d'une masse totale de la composition de lubrifiant.

7. Réducteur de vitesse de type engrenage planétaire oscillant excentrique, dans lequel une composition de lubrifiant pour un réducteur de vitesse est scellée, comprenant les constituants (a) à (d) suivants :
(a) une huile de base contenant une huile synthétique ;
(b) au moins un sel de calcium dont le nombre de base mesuré selon JIS K 2501 est d'au moins 200 mg de KOH/g ou est inférieur à 200 mg de KOH/g, et qui est choisi dans le groupe consistant en sels de calcium d'acides sulfoniques de pétrole, sels de calcium d'acides alkylsulfoniques aromatiques, sels de calcium de salicylates, sels de calcium de phénates, sels de calcium de cires oxydées ;
(c) un antioxydant ; et
(d) un ester d'acide gras de glycérine.

8. Réducteur de vitesse de type engrenage planétaire oscillant excentrique selon la revendication 7, dans lequel une teneur du (b) sel de calcium est de 0,05 à 5 % en masse, une teneur du (c) oxydant est de 0,05 à 5 % en masse, et une teneur du (d) ester d'acide gras de glycérine est de 0,05 à 5 % en masse sur la base d'une masse totale de la composition de lubrifiant.

9. Réducteur de vitesse de type engrenage planétaire oscillant excentrique selon la revendication 7 ou 8, dans lequel le (b) sel de calcium est choisi dans le groupe consistant en sels de calcium d'acides alkylsulfoniques aromatiques dont le nombre de base mesuré selon JIS K 2501 est inférieur à 200 mg de KOH/g, et sels de calcium de salicylates dont le nombre de base mesuré selon JIS K 2501 est d'au moins 200 mg de KOH/g.

10. Réducteur de vitesse de type engrenage planétaire oscillant excentrique selon l'une quelconque des revendications 7 à 9, dans lequel le (c) antioxydant est un phénol encombré.

11. Réducteur de vitesse de type engrenage planétaire oscillant excentrique selon l'une quelconque des revendications 7 à 10, dans lequel l'huile synthétique dans la (a) huile de base est une huile hydrocarbonée synthétique, et une viscosité cinématique à 40°C de l'huile de base est de 20 à 300 mm²/s.

12. Réducteur de vitesse de type engrenage planétaire oscillant excentrique selon l'une quelconque des revendications 7 à 11, dans lequel la composition de lubrifiant comprend de plus (e) un composé de thiadiazole, dans lequel une teneur du composé de thiadiazole est de 5 % en masse ou inférieure sur la base d'une masse totale de la composition de lubrifiant.
